# EUROPÄISCHE PATENTSCHRIFT

(11) **EP 2 070 866 B1**
(45) Veröffentlichungstag und Bekanntmachung des Hinweises auf die Patenterteilung: **19.01.2011**
(21) Anmeldenummer: 08020375.5
(22) Anmeldetag: 24.11.2008
(51) Int. Cl.: B67D 1/07, B08B 9/032

(54) **Vorrichtung und Verfahren zur Reinigung von Flüssigkeits- und insbesondere Getränkeausgabeeinrichtungen**
Device and method to clean liquid especially drinks vending devices
Dispositif et procédé destinés au nettoyage de dispositifs de distribution de liquides et notamment de boissons

(30) Priorität: 23.11.2007 CH 18152007
(43) Veröffentlichungstag der Anmeldung: 17.06.2009
(73) Patentinhaber: Jäger, Urs, 5702 Niederlenz (CH)
(72) Erfinder: Jäger, Urs, 5702 Niederlenz (CH); Balkau, Werner, 8762 Schwändi (CH)
(74) Vertreter: Schalch, Rainer

(56) Entgegenhaltungen:
- WO-A-2004/058019
- US-B1- 6 240 952

## Beschreibung

Die Erfindung betrifft eine Vorrichtung zur Reinigung von Flüssigkeits- und insbesondere Getränkeausgabeeinrichtungen. Ferner betrifft die Erfindung ein Verfahren zur Reinigung von Flüssigkeits- und insbesondere Getränkeausgabeeinrichtungen sowie eine Flüssigkeits- und insbesondere Getränkeausgabeeinrichtung.

Herkömmlicherweise werden Getränkeausgabeeinrichtungen, wie Einrichtungen zur Zubereitung von Sodawasser oder Mischgetränken, oder auch Zapfeinrichtungen, insbesondere für Bier, durch eine Serviceperson mit spezieller Reinigungsausrüstung gereinigt, was aufwändig ist und daher zum Teil unterbleibt oder nur in zu langen Abständen erfolgt, so dass die sich in der Getränkeausgabeeinrichtung aufbauenden Verunreinigungen, welche einen bakteriellen Biofilm enthalten können, nur unzureichend entfernt werden. Solche Probleme stellen sich auch bei Kaffeemaschinen, insbesondere wenn diese mit Milchschäumern versehen sind. Ebenso kann sich das Problem generell bei der Flüssigkeitsabgabe stellen, z.B. bei einer zahnärztlichen Behandlungseinrichtung, bei welcher Spülflüssigkeit abgegeben wird. Aus US-B-6 240 952 ist eine Getränkeausgabeeinrichtung mit einer Reinigungsvorrichtung gemäss Oberbegriff des Anspruchs 1 bekannt. Aus WO-A 2004/058019 ist eine weitere Getränkeausgabeeinrichtung bekannt, wobei ein Leitfähigkeitssensor den Füllstand in einem Behälter für Reinigungsflüssigkeit feststellen kann. Bei beiden Einrichtungen kann nicht sichergestellt werden, dass die richtige Reinigungsflüssigkeit verwendet wird.

Hier will die Erfindung Abhilfe schaffen.

Dies erfolgt bei der Vorrichtung der eingangs genannten Art mit den Merkmalen des Anspruchs 1.

Dadurch, dass die Vorrichtung zum Anschluss eines Druckbehälters mit Reinigungsfluid ausgestaltet ist, kann eine sehr einfache und korrekt dosierte und eingesetzte Reinigung bzw. Abgabe des Reinigungsmittels an die Flüssigkeits- bzw. Getränkeausgabeeinrichtung erfolgen, wobei die Erkennungseinrichtung sicherstellt, dass nur Druckbehälter mit einem zulässigen Reinigungsmittel verwendet werden können. Mit der Erkennungseinrichtung ist es ferner möglich, die Reinigung so zu steuern, dass der erkannte Druckbehälter bzw. das erkannte Reinigungsmittel zur Reinigung optimal eingesetzt wird. Dies erlaubt es, die Reinigung ohne Fachpersonal bzw. durch den Betreiber der Flüssigkeits- bzw. Getränkeausgabeeinrichtung selber durchzuführen, da nur der Druckbehälter mit dem Reinigungsfluid anzubringen ist, wonach die Reinigung selbsttätig ablaufen kann. Dies erhöht die Bereitschaft, die Reinigung regelmässig vorzunehmen.

Die Erkennungseinrichtung kann zur mechanischen Abtastung von Erkennungsmerkmalen des Druckbehälters ausgestaltet sein, womit entsprechende mechanische Eigenschaften, wie z.B. Aus- oder Einformungen, erkannt werden können, die den Druckbehälter kennzeichnen. Wird ein Druckbehälter eingesetzt, der dieser Kennzeichnung nicht entspricht, so kann die Vorrichtung den Betrieb verweigern und dies auch anzeigen, wodurch Fehlbedienungen vermieden werden. Die Erkennungseinrichtung kann auch zur optischen Abtastung von Erkennungsmerkmalen des Druckbehälters ausgestaltet sein, z.B. zur Abtastung eines Strichkodes auf dem Druckbehälter. Ferner kann die Erkennungseinrichtung zur Abfrage eines Datenträgers am Druckbehälter ausgestaltet sein, so dass dadurch Daten, die den Druckbehälter und dessen Inhalt kennzeichnen, erkannt werden können.

Vorzugsweise weist die Vorrichtung einen ersten Flüssigkeitseingang auf, der über ein zweites steuerbares Ventil steuerbar mit dem Ausgang verbindbar ist. Dadurch kann eine Flüssigkeit, insbesondere eine Spülflüssigkeit, insbesondere Leitungswasser, durch die Vorrichtung hindurch an die Flüssigkeits- bzw. Getränkeausgabeeinrichtung abgegeben werden, so dass nach der Reinigung eine Spülung erfolgen kann. Dieser Eingang kann aber auch für ein Getränk oder einen Getränkebestandteil dienen, der nach der Reinigung über die Vorrichtung der Getränkeausgabeeinrichtung zugeführt wird. Bei einer weiteren bevorzugten Ausführungsform weist die Vorrichtung einen zweiten Flüssigkeitseingang auf, welcher über ein drittes steuerbares Ventil steuerbar mit dem Ausgang verbindbar ist. Dies erlaubt die getrennte Zuführung sowohl einer Spülflüssigkeit sowie ausserhalb des Reinigungsbetriebs eines Getränkes oder eines Getränkebestandteils an die Getränkeausgabeeinrichtung über die zwei steuerbaren Eingänge. Bei einer weiteren Ausführungsform ist ein Drucksensor vorgesehen, der den Druck in dem Druckbehälter mit dem Reinigungsfluid erfassen kann, wodurch sicher gestellt wird, dass die Reinigung mit genügendem Druck erfolgt und bei Erschöpfung des Druckbehälters beendet bzw. gar nicht erst aufgenommen wird, wenn ein Druckbehälter mit ungenügendem Druck eingesetzt wird. Anstelle eines Druckbehälters mit Reinigungsfluid kann zwischen den Reinigungsintervallen mit der selben Vorrichtung dem Getränk ein Aromastoff beigegeben werden, indem ein Druckbehälter enthaltend den Aromastoff eingesetzt wird. Dank der Erkennungseinrichtung kann dies erkannt und kann der Aromastoff korrekt zudosiert werden.

Das Verfahren gemäss der Erfindung weist die Merkmale des Anspruchs 6 auf. Damit ergeben sich die geschilderten Vorteile bei der Reinigung von Flüssigkeitsausgabeeinrichtungen und insbesondere von Getränkeausgabeeinrichtungen.

Eine Flüssigkeits- und insbesondere Getränkeausgabeeinrichtung mit den erläuterten Vorteilen ergibt sich gemäss Anspruch 12. Diese ist insbesondere eine Einrichtung zur Erzeugung von Sodawasser oder von Mischgetränken oder ein Zapfhahn, insbesondere ein Bierzapfhahn, oder eine Kaffeemaschine. Die Flüssigkeitsausgabevorrichtung kann aber auch Teil einer zahnärztlichen Behandlungseinrichtung sein.

Im Folgenden werden Ausführungsbeispiele der Erfindung anhand der Zeichnungen näher erläutert. Dabei zeigt
Figur 1 eine schematische Ansicht einer ersten Ausführungsform der Vorrichtung, die an eine Getränkeausgabeeinrichtung angeschlossen ist;
Figur 2 eine schematische Ansicht einer weiteren Ausführungsform;
Figur 3 eine schaubildliche Ansicht schräg von oben auf eine Ausführungsform gemäss Figur 2; und
Figur 4 die Ausführungsform von Figur 3 in schaubildlicher Ansicht schräg von unten.

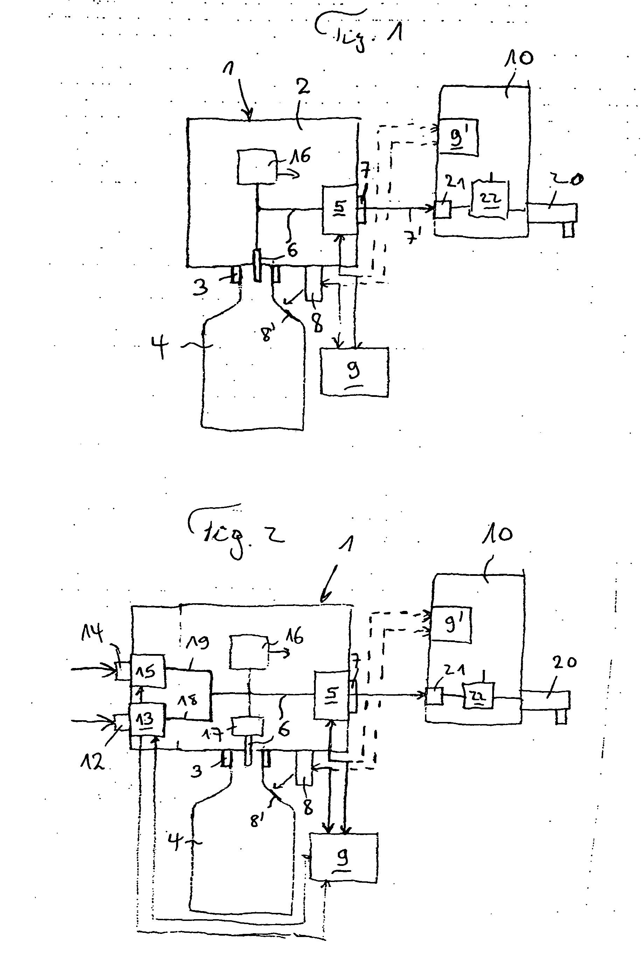

Figur 1 zeigt in stark vereinfachter schematischer Darstellung eine Ausführungsform der Reinigungsvorrichtung 1, welche an eine Getränkeausgabeeinrichtung 10 angeschlossen ist. Die Getränkeausgabeeinrichtung 10 kann eine beliebige bekannte Einrichtung zur Bereitstellung und Ausgabe eines Getränkes sein, welches über den Ausguss 20 bei Bedarf abgegeben wird. Insbesondere kann es sich um eine Getränkeausgabeeinrichtung handeln, in welcher aus Leitungswasser oder aus Wasser in einem Vorratsbehälter durch Zugabe von CO₂ ein Sodagetränk hergestellt wird, und/oder in welcher zu Wasser ein Aromastoff hinzugefügt wird. Bei der Getränkeausgabeeinrichtung 10 kann es sich aber auch um einen einfachen Zapfhahn handeln, insbesondere um einen Zapfhahn zur Ausgabe von Bier. Weiter kann es sich um eine Kaffeemaschine handeln, insbesondere mit Milchschäumer. Dabei kann die Kaffeemaschine gereinigt werden und/oder der Milchschäumer.

Die Getränkeausgabeeinrichtung 10 weist einen Eingangsanschluss 21 auf, an welchem ein Reinigungsfluid in die Einrichtung 10 gegeben werden kann, welches die nur angedeuteten internen Leitungen 22 der Einrichtung 10 reinigt sowie den Ausguss 20. Solches ist grundsätzlich bekannt und bei jeder Getränkeausgabeeinrichtung 10 auf für die jeweilige Einrichtung spezifische Weise verwirklicht. Der Eingangsanschluss 21 kann auch der Eingangsanschluss für das Getränk oder einen Getränkebestandteil sein, welches ausgeben wird. In diesem Fall ist zur Reinigung die entsprechende Getränkezuführleitung abzukoppeln und die Reinigungsvorrichtung 1 anzukoppeln, welche dann über die Leitung 7' mit der Einrichtung 10 verbunden ist. Die Einrichtung 10 kann aber auch getrennte Eingänge für ein Getränk und für Reinigungsfluid umfassen, sodass die Vorrichtung 1 stets an die Einrichtung 10 angekoppelt bleibt. Die Vorrichtung 1 zur Reinigung der Getränkeausgabeeinrichtung 10 kann auch permanent in dieser angeordnet sein. Im vorliegenden schematischen Beispiel wird die Vorrichtung 1 aber separat dargestellt.

Die Reinigungsvorrichtung 1 umfasst einen Anschlussblock 2, welcher zum Beispiel aus Metall oder Kunststoff gebildet und welcher einerseits zum Anschluss des Druckbehälters 4 dient, welcher das Reinigungsfluid enthält und andererseits bevorzugt die noch zu beschreibenden Komponenten der Reinigungsvorrichtung 1 aufnimmt. Mit 4 ist ein Druckbehälter 4 bezeichnet, welcher ein Reinigungsfluid unter Druck enthält. Dies ist ein Reinigungsfluid, welches für die Reinigung von Getränkeausgabeeinrichtungen geeignet ist. Bevorzugterweise ist es ein giftklassefreies Reinigungsmittel, insbesondere das Reinigungsmittel Steriplant® N der Firma Swiss Steriplant AG, Muttenz, Schweiz. Der Druckbehälter ist grundsätzlich in der Form einer herkömmlichen Sprühdose gebildet und enthält das Reinigungsmittel zum Beispiel unter einem Druck von ca. 6 bar. Der Druckbehälter 4 kann ein Tauchrohr enthalten, das bis zu dessen Boden eingeführt ist. Das Fluid wird aus dem Druckbehälter auf bekannte Weise mittels eines Gases, zum Beispiel Stickstoff, gefördert. Der Druckbehälter 4 und der Anschlussblock 2 sind derart ausgestaltet, dass ein Anschlussteil 3 zur druckdichten Aufnahme des Druckbehälters vorgesehen ist. Es kann sich dabei um einen Bajonett-Anschluss handeln, an welchem der Druckbehälter durch eine Drehbewegung befestigbar ist. Ein Teil der Leitung 6, welche vom Druckbehälter 4 zum Ausgang 7 der Vorrichtung führt, kann zum Beispiel in Form eines Zapfens ausgeführt sein, der die Verbindung der Leitung 6 mit dem Inhalt des Druckbehälters 4 hierstellt, wenn dieser am Anschlussteil 3 der Vorrichtung 1 befestigt wird. Dies ist nur als Beispiel zu verstehen und es könnten andere Elemente vorgesehen sein, welche den Druckbehälter 4 erst nach oder während der Verbindungsherstellung mit der Vorrichtung 1 in Verbindung mit der Leitung 6 bringen. Das unter Druck stehende Reinigungsfluid gelangt über die Leitung 6 der Vorrichtung 1 zum ersten steuerbaren Ventil 5, welches das Reinigungsfluid am Ausgang 7 der Vorrichtung 1 steuerbar abgeben kann, sodass es über die Leitung 7' in die Einrichtung 10 gelangt. Das steuerbare Ventil 5 wird von einer Steuerung 9 bedient, welche ein Teil der Vorrichtung 1 sein kann. Alternativ kann die Steuerung auch in der Getränkeausgabeeinrichtung 10 vorgesehen sein, was in der Figur 1 durch die Steuerung 9' dargestellt ist sowie durch die unterbrochen dargestellte Steuerleitung zum Ventil 5. Es ist auch möglich, dass die Steuerung der Einrichtung 10 mit einer Steuerung 9 der Vorrichtung 1 kommuniziert. Mit der Steuerung 9 bzw. alternativ oder zusätzlich mit der Steuerung 9' ist ferner die Erkennungseinrichtung 8 der Vorrichtung 1 verbunden und gibt ihre Signale betreffend die Erkennung des Druckbehälters 4 an diese Steuerung oder Steuerungen ab. Die Einrichtung 8 kann eine mechanische Abtasteinrichtung sein, welche auch im Anschlussteil 3 vorgesehen sein kann, und welche auf mechanische Weise die Eigenschaften der Dose 4 und/ oder des Reinigungsfluids erkennen kann, welche mechanisch an der Dose 4 kodiert sind. Dies kann zum Beispiel durch Ausformungen oder Einformungen an dem Druckbehälter bzw. der Dose 4 der Fall sein, welche mechanisch abtastbar sind. Eine mechanische Erkennungseinrichtung kann auch unter Umgehung der Steuerung direkt ein mechanisches Sperren der Behälteröffnung bewirken, indes ist der Weg über die Steuerung bevorzugt. Bevorzugt ist allerdings eine berührungslose Erkennung, welche zum Beispiel eine optische Erkennung eines Strichcodes an dem Druckbehälter 4 sein kann. Entsprechend umfasst die Einrichtung 8 einen Strichcodeleser, welcher die Strichcodedaten ausgewertet oder unausgewertet an die Steuerung 9 abgibt. In der bevorzugten Ausführungsform ist die Einrichtung 8 ein Lesegerät zur Auslesung von Transponder-Daten, welche in einem Transponder 8' enthalten sind, der am Druckbehälter 4 befestigt ist. Der Transponder kann Daten über den Druckbehälter und insbesondere über das Reinigungsfluid enthalten. Diese Daten sind mittels Hochfrequenz durch das Lesegerät auslesbar, was dem Fachmann bekannt ist und was unter dem Begriff Radio Frequency Identification (RFID) bekannt ist. Derartige Lesegeräte und Transponder sind handelsüblich. Auf diese Weise erkennt die Vorrichtung 1, was für ein Druckbehälter und was für ein Reinigungsfluid an der Vorrichtung 1 angekoppelt worden ist. Entsprechend kann die Vorrichtung 1 die Reinigung steuern bzw. nicht durchführen, wenn ein ungeeignetes Reinigungsfluid verwendet werden soll. Bei der bevorzugten Verwendung eines giftklassefreien Reinigungsfluids ist insbesondere dies als Eigenschaft des Fluids durch die Erkennungseinrichtung 8 bzw. die Steuerung ermittelbar. Ist ein Druckbehälter angekoppelt worden, der ein ungeeignetes Reinigungsfluid enthält, so kann die Reinigung verweigert werden und dies kann durch die Steuerung an die Bedienungsperson angezeigt werden. Wird andererseits ein Druckbehälter 4 mit einem geeigneten Reinigungsfluid angekoppelt, so kann die Reinigung aufgenommen werden. Auch dies kann durch die Steuerung angezeigt werden. In diesem Fall wird der Fluss von Reinigungsfluid aus dem Druckbehälter 4 durch die Leitung 6 durch das steuerbare Ventil 5 freigegeben, sodass das Reinigungsfluid über den Ausgangsanschluss 7 der Vorrichtung 1 und die Leitung 7' in die Getränkeausgabeeinrichtung 10 strömt und dort auf an sich gekannte Weise die Elemente 21, 22 und 20 reinigt. Dazu muss allenfalls die Einrichtung 10 bedient werden, sodass das Reinigungsfluid durch den Ausfluss 20 ausströmt. Solches ist je nach Einrichtung 10 verschieden und muss hier nicht erläutert werden, sondern hängt von der jeweiligen Einrichtung 10 ab. Das Reinigungsfluid kann in dem Druckbehälter 4 so bemessen sein, das der gesamte Behälterinhalt zur Reinigung ausgegeben wird. Dabei fällt der Druck im Behälter kontinuierlich ab. In der Vorrichtung 1 kann ein Drucksensor 16 vorgesehen sein, welcher ebenfalls mit der Steuerung 9 verbunden ist und welcher den Druck des Reinigungsfluids feststellt. Unterschreitet dieser einen vorgesehenen Wert, so wird die Reinigung beendet. Ebenso kann die Reinigung bereits anfänglich verweigert werden, wenn durch den Drucksensor erkennbar ist, dass eine bereits weitgehend entleerte Dose 4 mit zu geringem Druck an die Vorrichtung 1 angeschlossen wird. Die Erkennungseinrichtung 8 kann auch feststellen, ob ein Ablaufdatum für den Druckbehälter bzw. das Reinigungsfluid erreicht ist. Auch diesfalls kann die Reinigung bereits von Anfang an verweigert werden. Die Steuerung kann auch abhängig vom Reinigungsmittel eine alternative Reinigungsmethode wählen, bei welcher das Reinigungsmittel während des Betriebs der Einrichtung 10 zeitweise und niedrig dosiert an die Einrichtung abgegeben wird, so dass sich das Reinigungsmittel im konsumierten Getränk befindet. Dies ist natürlich nur bei einem giftklassenfreien Reinigungsmittel zulässig, welches für den Konsum geeignet ist. Für diese Anwendung sind insbesondere die Ausführungen nach Figur 2 geeignet, welche nun erläutert werden.

Figur 2 zeigt eine weitere Ausführungsform, worin gleiche Bezugszeichen wiederum gleiche Elemente bezeichnen. Auch die in Figur 2 gezeigte Vorrichtung kann in die Einrichtung 10 integriert sein oder kann separat angeordnet und mit dieser, wie in der Figur gezeigt, in Fluidverbindung stehen. In der einen Ausführungsform, welche in Figur 2 ersichtlich ist, weist die Vorrichtung 1 einen Fluideingang 12 auf, welcher über ein steuerbares Ventil 13 mit der Fluidleitung 18 verbunden ist, welche in die Leitung 6 mündet. Vorzugsweise ist für diesen Fall ein Rückschlagventil 17 vorgesehen, welches den Eintritt von Fluid aus der Leitung 18 in den Druckbehälter 4 verhindert, falls der Druck des Fluids auf der Leitung 18 höher ist als der Druck im Druckbehälter 4. Über den Fluid- bzw. Flüssigkeitseingang 12 kann Wasser in die Vorrichtung zugeführt werden, insbesondere Leitungswasser, welches zur Spülung nach beendeter Reinigung mit dem Reinigungsfluid dient. In diesem Fall wird nach der Reinigung durch die Steuerung das Ventil 13 geöffnet, so dass Spülwasser durch die Leitung 18, die Leitung 6 und das geöffnete Ventil 5 in die Einrichtung 10 abgegeben wird, um diese zu spülen. Der Eingang 12 der Vorrichtung 1 kann aber auch der Getränkeeingang für die Einrichtung 10 sein, sodass nach erfolgter Reinigung das Getränk für die Getränkeausgabeeinrichtung 10 über den Eingang 12, das Ventil 13, die Leitung 18 und 6 und das Ventil 5 in die Einrichtung 10 einströmt und dort diese für den normalen Getränkeausgabebetrieb speist. Ist zum Beispiel die Einrichtung 10 ein Zapfhahn, insbesondere ein Bierzapfhahn, so würde in dieser Ausführung der Bierzufluss über den Eingang 12 erfolgen. Anstelle oder zusätzlich zum Rückschlagventil 17 kann an dieser Stelle auch ein steuerbares Ventil angeordnet sein, welches die Leitung 6 zum Druckbehälter hin bzw. zum Anschlussteil 3 hin im normalen Betrieb sperrt.

Bei einer weiteren Ausführungsform, welche in Figur 2 gezeigt ist, ist ein weiterer Eingang 14 vorgesehen, welcher über ein drittes steuerbares Ventil 15, das ebenfalls durch die Steuerung 9 oder alternativ die Steuerung 9' betätigt wird. In diesem Fall weist die Vorrichtung 1 wohl einen Eingang 12 für ein Spülmittel, zum Beispiel Leitungswasser auf, als auch einen zweiten Eingang 14 für das Getränk. Nach dem Reinigungsbetrieb wird somit das zweite Ventil 13 geöffnet, damit die Spülflüssigkeit, insbesondere Leitungswasser, zur Spülung der Einrichtung 10 nach der Reinigung verwendet werden kann. Nach dem Spülvorgang wird das Ventil 13 geschlossen und für den Getränkeausgabebetrieb der Einrichtung 10 wird das dritte Ventil 14 geöffnet, sodass das Getränk oder die Getränkekomponente die am Eingang 14 angeschlossen ist, über das Ventil 15, die Leitung 19, die Leitung 6 und das Ventil 5 in die Einrichtung 10 gelangt. Die dargestellte Konfiguration, bei welcher die Leitungen 18 und 19 mit der Leitung 6 und dem Ventil 5 verbunden sind, ist nur als Beispiel zu verstehen. die Leitungen 18 und gegebenenfalls 19 können auch separat zum Ausgang 7 der Vorrichtung geführt werden und von dort ohne Benützung des Ventils 5 an die Einrichtung 10 abgegeben werden. Ist die Vorrichtung 1 in der Einrichtung 10 integriert, so können die Leitungen 19 und 18 auch direkt in der Einrichtung mit den entsprechenden Anschlüssen verbunden sein.

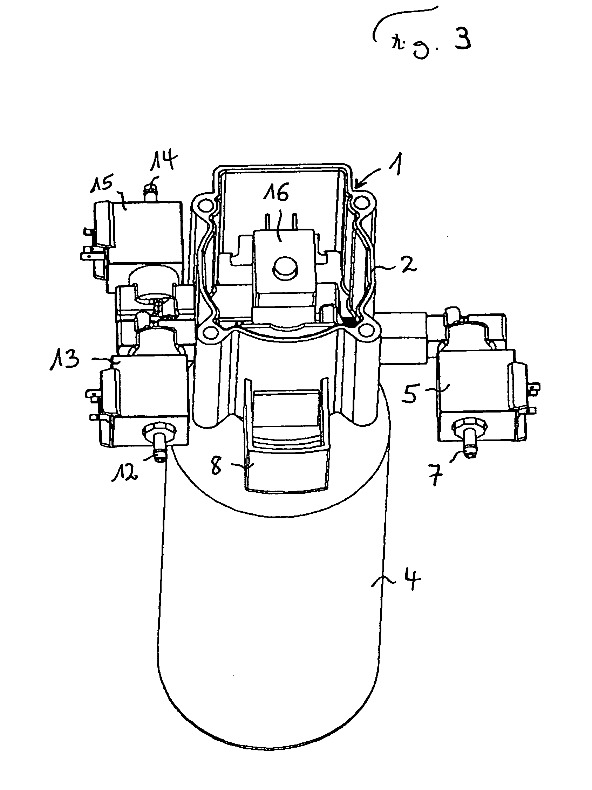

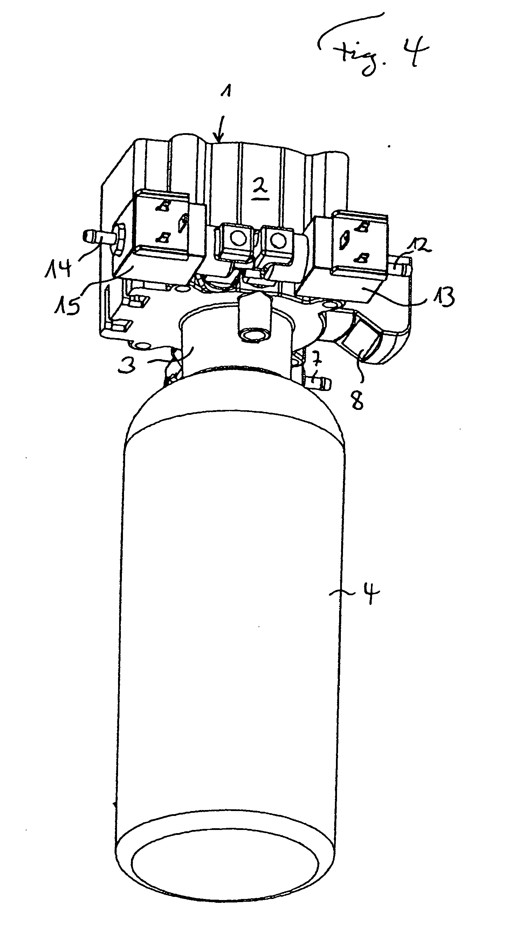

Die Figuren 3 und 4 zeigen eine schaubildliche Darstellung der Ausführungsform von Figur 2 mit beiden Ventilen 13 und 15, wobei auch in diesen Figuren gleiche Bezugszeichen wiederum gleiche Elemente bezeichnen. Ersichtlich ist insbesondere die Erkennungseinrichtung 8 am Anschlussblock 2, welche auf den Druckbehälter hinblickt. Ersichtlich sind auch die steuerbaren Magnetventile sowie die Anschlussstutzen für die Fluideingänge bzw. den Fluidausgang. Ersichtlich ist weiter das Anschlussteil 3 für den Druckbehälter bzw. die Dose 4.

Als weitere Ausführungsform kann die Erkennungseinrichtung so ausgestaltet sein, dass sie zusätzlich Druckbehälter erkennt, die einen Aromastoff anstelle des Reinigungsfluids enthalten, so dass dann durch die Steuerung mittels der Vorrichtung eine Abgabe des Aromastoffes an die Getränkeausgabeeinrichtung erfolgt, der dort dem Getränk zugemischt wird. Wird erneut ein Druckbehälter mit Reinigungsfluid eingesetzt, so erfolgt die geschilderte Reinigung.

Anstelle der Getränkeausgabeeinrichtung 10 kann eine beliebige Flüssigkeitsausgabeeinrichtung treten, bevorzugt in einer zahnärztlichen Behandlungseinrichtung, bei welcher ebenfalls Flüssigkeit abgegeben wird, die aber in der Regel kein nicht als Getränk vorgesehen ist, sondern als Spülflüssigkeit, sei dies als direkt während der Behandlung eingesetzte Spülflüssigkeit, die über eine Düse in den Mund abgegeben wird oder als Spülflüssigkeit, die dem Patienten in einem Becher als Mundspülung bereit gestellt wird.

## Patentansprüche

1. Vorrichtung (1) zur Reinigung von Flüssigkeitsausgabeeinrichtungen (10), insbesondere Getränkeausgabeeinrichtungen (10), umfassend einen Anschlussblock (2) mit einem Anschlussteil (3), welches zum Anschluss eines Druckbehälters (4) ausgestaltet ist, der Reinigungsfluid unter Druck enthält, ein erstes steuerbares Ventil (5), welches über eine Fluidverbindung (6) mit dem Anschlussteil (3) verbunden ist und durch welches Reinigungsfluid steuerbar an einen Ausgang (7) der Vorrichtung abgebbar ist, an welchem die Flüssgkeitsausgabeeinrichtung bzw. die Getränkeausgabeeinrichtung anschliessbar ist, **gekennzeichnet durch** eine Erkennungseinrichtung (8) für den Druckbehälter, **durch** welche mindestens eine Eigenschaft des Druckbehälters und/oder des Reinigungsfluides erkennbar und als Signal abgebbar ist, wobei die Erkennungseinrichtung zur mechanischen Abtastung von Erkennungsmerkmalen des Druckbehälters ausgestaltet ist, und/oder die Erkennungseinrichtung zur optischen Abtastung von Erkennungsmerkmalen des Druckbehälters ausgestaltet ist, und/oder die Erkennungseinrichtung zur Abfrage eines Datenträgers am Druckbehälter ausgestaltet ist.

2. Vorrichtung nach Anspruch 1, **dadurch gekennzeichnet, dass** diese einen ersten Flüssigkeitseingang (12) aufweist, welcher über ein zweites steuerbares Ventil (13) steuerbar mit dem Ausgang (7) verbindbar ist.

3. Vorrichtung nach einem der Ansprüche 1 oder 2, **dadurch gekennzeichnet, dass** diese einen zweiten Flüssigkeitseingang (14) aufweist, welcher über ein drittes steuerbares Ventil (15) steuerbar mit dem Ausgang (7) verbindbar ist.

4. Vorrichtung nach einem der Ansprüche 1 bis 3, **dadurch gekennzeichnet, dass** diese einen Drucksensor (16) umfasst, durch welchen der Druck des Reinigungsfluids im am Anschlussteil angeschlossenen Druckbehälters bestimmbar und als Signal ausgebbar ist.

5. Vorrichtung nach einem der Ansprüche 1 bis 4 umfassend eine Steuerung (9), welche zum Empfang eines Erkennungssignals aus der Erkennungseinrichtung und zur Abgabe eines Steuersignals für das erste steuerbare Ventil (5) ausgestaltet ist.

6. Verfahren zur Reinigung einer Flüssgkeitsausgabeeinrichtung, insbesondere einer Getränkeausgabeeinrichtung (10), mittels eines Vorrichtung nach einem der Ansprüche 1 bis 5, **gekennzeichnet durch** das Anschliessen eines Druckbehälters mit Reinigungsfluid an den Anschlussblock, Erkennung des Druckbehälters und/oder des Reinigungsfluids **durch** die Erkennungseinrichtung und Abgabe des Reinigungsfluids am Ausgang der Vorrichtung abhängig von der Erkennung.

7. Verfahren nach Anspruch 6, **dadurch gekennzeichnet, dass** das Reinigungsfluid stetig abgegeben wird, bis der Druck des Reinigungsfluids einen unteren Grenzwert erreicht.

8. Verfahren nach Anspruch 6, **dadurch gekennzeichnet, dass** das Reinigungsfluid zeitweise mit Unterbrechungen der Abgabe abgegeben wird und insbesondere während des Betriebes der Flüssgkeitsausgabeeinrichtung bzw. der Getränkeausgabeeinrichtung abgegeben wird.

9. Verfahren nach einem der Ansprüche 6 bis 8, **dadurch gekennzeichnet, dass** die Getränkeausgabeeinrichtung eine Mischvorrichtung oder eine Zapfeinrichtung oder eine Kaffeemaschine und/oder ein Milchschäumer ist.

10. Verfahren nach einem der Ansprüche 6 bis 9, **dadurch gekennzeichnet, dass** das Reinigungsfluid ein giftklassefreies Reinigungsfluid ist.

11. Verfahren nach einem der Ansprüche 6 bis 10, **dadurch gekennzeichnet, dass** die Erkennungseinrichtung zur Erkennung von Druckbehältern ausgestaltet ist, die Aromastoff enthalten, und dass mittels der Vorrichtung zwischen Reinigungsvorgängen ein Aromastoff an die Getränkeausgabeeinrichtung abgegeben wird.

12. Flüssigkeitsausgabeeinrichtung, insbesondere Getränkeausgabeeinrichtung (10), mit einer Vorrichtung nach einem der Ansprüche 1 bis 5.

13. Flüssgkeitsausgabeeinrichtung nach Anspruch 12, **dadurch gekennzeichnet, dass** die Steuerung (9') der Flüssgkeitsausgabeeinrichtung (10) zur Steuerung der Vorrichtung ausgestaltet ist.

14. Flüssigkeitsausgabeeinrichtung nach Anspruch 12 oder 13, **dadurch gekennzeichnet, dass** diese eine Einrichtung zur Erzeugung von Sodawasser und/oder von Mischgetränken oder ein Zapfhahn oder eine Kaffeemaschine und/oder ein Milchschäumer ist.

15. Flüssgkeitsausgabeeinrichtung nach Anspruch 12 oder 13, **dadurch gekennzeichnet, dass** diese eine zahnärztliche Behandlungseinrichtung mit einer Einrichtung zur Abgabe von Spülflüssigkeit ist.

## Claims

1. Device (1) for cleaning liquid dispensers (10), particularly beverage dispensers (10), comprising a connection block (2) with a connection part (3), which is formed to connect to a pressure tank (4) containing cleaning fluid under pressure, a first controllable valve (5) which is connected to the connection part (3) via a fluid connection (6) and by means of which cleaning fluid is controllably deliverable to an outlet (7) of the device, to which the liquid dispenser or the beverage dispenser respectively are connectable, **characterised by** a detector (8) for the pressure tank, by means of which at least a feature of the pressure tank and/or of the cleaning fluid is detectable and transmissible as a signal, wherein the detector is formed to mechanically scan defining features of the pressure tank, and/or the detector is formed to optically scan defining features of the pressure tank, and/or the detector is formed to query a data carrier at the pressure tank.

2. Device according to claim 1, **characterised in that** it has a first liquid inlet (12) which is controllably connectable to the outlet (7) by means of a second controllable valve (13).

3. Device according to one of the claims 1 or 2, **characterised in that** it has a second liquid inlet (14) which is controllably connectable to the outlet (7) by means of a third controllable valve (15).

4. Device according to one of the claims 1 to 3, **characterised in that** it comprises a pressure sensor (16) by means of which the pressure of the cleaning liquid in the pressure tank connected to the connection part is determinable and transmissible as a signal.

5. Device according to one of the claims 1 to 4, comprising a controller (9) which is formed to receive a detection signal from the detector and to transmit a control signal for the first controllable valve (5).

6. Method for cleaning a liquid dispenser, particularly a beverage dispenser (10), by means of a device according to one of the claims 1 to 5, **characterised by** the connection of a pressure tank with cleaning fluid to the connection block, detection of the pressure tank and/or of the cleaning fluid by the detector and delivery of the cleaning fluid at the outlet of the device depending on the detection.

7. Method according to claim 6, **characterised in that** the cleaning fluid is delivered continuously until the pressure of the cleaning fluid reaches a low limit value.

8. Method according to claim 6, **characterised in that** the cleaning fluid is temporarily delivered with interruptions of the deliverance and is particularly delivered during the operation of the liquid dispenser or the beverage dispenser respectively.

9. Method according to one of the claims 6 to 8, **characterised in that** the beverage dispenser is a mixing device or a tap device or a coffee machine and/or a milk foamer.

10. Method according to one of the claims 6 to 9, **characterised in that** the cleaning fluid is a poisonous category free cleaning fluid.

11. Method according to one of the claims 6 to 10, **characterised in that** the detector is formed to detect pressure tanks containing flavourings, and **in that** a flavouring is delivered to the beverage dispenser by the device between cleaning processes.

12. Liquid dispenser, particularly beverage dispenser (10), with a device according to one of the claims 1 to 5.

13. Liquid dispenser according to claim 12, **characterised in that** the controller (9') of the liquid dispenser (10) is formed to control the device.

14. Liquid dispenser according to claim 12 or 13, **characterised in that** it is an installation for producing soda water and/or mixed drinks or a tap or a coffee machine and/or a milk foamer.

15. Liquid dispenser according to claim 12 or 13, **characterised in that** it is a dental treatment installation with an installation for delivery of rinsing liquid.

## Revendications

1. Dispositif (1) pour le nettoyage des distributeurs de liquides (10), particulièrement des distributeurs de boissons (10), comprenant un bloque de raccord (2) avec un élément de raccord (3), étant formé pour raccorder un réservoir sous pression (4) qui contient du fluide de nettoyage sous pression, une première valve (5) contrôlable qui est connectée à l'élément de raccord (3) par un raccord fluidique (6) et à l'aide de laquelle il est possible de livrer du fluide de nettoyage de manière contrôlable à une sortie (7) du dispositif auquel ledit distributeur de liquides ou bien ledit distributeur de boissons est raccordable, **caractérisé par** un détecteur (8) pour ledit réservoir sous pression, à l'aide duquel au moins une caractéristique du réservoir sous pression et/ou du fluide de nettoyage est détectable et transmissible sous forme de signal, le détecteur étant formé pour une exploration mécanique des caractéristiques significatives du réservoir sous pression, et/ou le détecteur étant formé pour un balayage optique des caractéristiques significatives du réservoir sous pression, et/ou le détecteur étant formé pour consulter un support de données numériques.

2. Dispositif selon la revendication 1, **caractérisé en ce qu'**il a une première entrée de liquide (12), qui est raccordable à ladite sortie (7) de manière contrôlable par une deuxième valve (13) contrôlable.

3. Dispositif selon l'une des revendications 1 ou 2, **caractérisé en ce qu'**il a une deuxième entrée de liquide (14), qui est raccordable à ladite sortie (7) de manière contrôlable par une troisième valve (15) contrôlable.

4. Dispositif selon l'une des revendications 1 à 3, **caractérisé en ce qu'**il comprend un capteur de pression (16), à l'aide duquel la pression du fluide de nettoyage dans le réservoir sous pression raccordé à l'élément de raccord est déterminable et transmissible sous forme de signal.

5. Dispositif selon l'une des revendications 1 à 4, comprenant une commande (9) formée pour recevoir un signal de détection du détecteur et pour transmettre un signal de commande pour la première valve (5) contrôlable.

6. Méthode pour nettoyer un distributeur de liquides, particulièrement un distributeur de boissons (10), à l'aide d'un dispositif selon l'une des revendications 1 à 5, **caractérisée par** le raccordement d'un réservoir sous pression avec du fluide de nettoyage au bloque de raccord, la détection du réservoir et/ou du fluide de nettoyage par le détecteur et la livraison du fluide de nettoyage à la sortie du dispositif dépendant de la détection.

7. Méthode selon la revendication 6, **caractérisée en ce que** le fluide de nettoyage est livré continuellement jusqu'à la pression du fluide de nettoyage arrive à une basse valeur limite.

8. Méthode selon la revendication 6, **caractérisée en ce que** le fluide de nettoyage est temporairement livré avec des interruptions de la livraison et qu'il est particulièrement livré pendant l'opération du distributeur de liquides ou bien du distributeur de boissons.

9. Méthode selon l'une des revendications 6 à 8, **caractérisée en ce que** le distributeur de boissons est un mélangeur ou un tireur de boissons ou une cafetière et/ou un mousseur à lait.

10. Méthode selon l'une des revendications 6 à 9, **caractérisée en ce que** le fluide de nettoyage est un fluide de nettoyage sans classe de toxicité.

11. Méthode selon l'une des revendications 6 à 10, **caractérisée en ce que** le détecteur est formé pour détecter des réservoirs sous pression contenant des arômes, et **en ce qu'**un arôme est livré par le dispositif, entre des processus de nettoyage, au distributeur de boissons.

12. Distributeur de liquides, particulièrement distributeur de boissons (10), avec un dispositif selon l'une des revendications 1 à 5.

13. Distributeur de liquides selon la revendication 12, **caractérisé en ce que** la commande (9') du distributeur de liquides (10) est formée pour commander le dispositif.

14. Distributeur de liquides selon la revendication 12 ou 13, **caractérisé en ce qu'**il est une installation pour la production de l'eau gazeuse et/ou des boissons mélangés ou un robinet distributeur ou une cafetière et/ou un mousseur à lait.

15. Distributeur de liquides selon la revendication 12 ou 13, **caractérisé en ce qu'**il est une installation de traitement dental avec une installation pour la livraison du liquide de rinçage.
